# EUROPEAN PATENT APPLICATION

(11) **EP 1 233 231 A2**
(43) Date of publication of application: **21.08.2002**
(21) Application number: 02003082.1
(22) Date of filing: 13.02.2002
(51) Int. Cl.: F16P 3/14

(54) **Factory personnel monitors**

(30) Priority: 15.02.2001 US 268982 P; 21.06.2001 US 886726
(71) Applicant: Progressive Tool & Industries Company, Southfield, MI 48034 (US)
(72) Inventor: Angel, Jeffrey R., Lake Orion, Michigan 48362 (US)
(74) Representative: Spoor, Brian

(57) **Abstract**

An apparatus and method for controlling equipment in response to a proximity signal from one or more chips and sensors for detecting proximity of an individual with respect to a manufacturing device. A chip (12a,12b) can be retained by an individual and a sensor (14a,14b) can be mounted on the manufacturing device (22a,22b). When the individual retaining the chip (12a,12b) comes into a predetermined proximity with the sensor (14a,14b), the sensor can emit a signal. The signal can be received by an electric control device (20a,2b) for disengaging operation of the machine or for placing the machine in a safe mode in response to the signal. The chip (12b) and the signal can interact in a first manner where the chip (12b) emits a signal receivable by the sensor. Alternatively, the chip (12a) and sensor (14a) can interact where the sensor (14a) emits a signal creating a field for identifying when a chip (12a) enters the signal generated field.

## Description

### FIELD OF THE INVENTION

The invention relates to a system for controlling operation of equipment in response to the monitored position of individuals within a manufacturing facility and, more specifically, to a system of chips and sensors for controlling automated equipment in response to the detected proximity of an individual retaining a chip relative to a sensor positioned within the facility.

### BACKGROUND OF THE INVENTION

Many devices have been developed to prevent machine operators from being injured in the performance of jobs around automated equipment. For example, fencing can be placed around a machine to prevent an operator or another individual from moving too close to the device. Another example of a safety feature is a double button assembly. In a double button assembly, the operator is required to press two different buttons to operate the machine. The two buttons are placed spaced apart from the machine so that the operator cannot be too close to the machine while the machine is running. Another example of a safety device is a light screen. Light screens can be positioned around a machine. When the light screen is pierced, the manufacturing device can be stopped or further automatic operation can be disengaged. Generally, a shortcoming of presently known safety devices is that each device is either too easily circumvented or is extremely costly.

### SUMMARY OF THE INVENTION

The present invention provides a system for controlling the operation of equipment in response to detected proximity of an individual to a location in a manufacturing facility, such as the location of a manufacturing device. The system can include chips retained by one or more individuals within the manufacturing facility and sensors positionable at any desired location in the manufacturing facility. In particular, the sensors can be positioned at a machine and can detect when an individual retaining a chip moves relatively close to the machine. The chips can be active or passive relative to the sensor and the sensor can be active or passive relative to the chips. The invention can also include control means for controlling the operation of a machine in response to a signal received from the sensor. Specifically, the control means can receive a signal from the sensor indicating that a chip has moved in relatively close proximity to a machine. The control means can disengage, stop or place the machine in a safe mode in response to the signal. A manufacturing facility can include a plurality of sensors located at various locations in the manufacturing facility. Chips can be retained by each individual in the manufacturing facility. Each chip can be uniquely configured for each individual, or for a group of individuals, or can be similarly configured for all individuals. The invention can also include data storage means for collecting data relating to the position of individuals in the manufacturing facility.

Other applications of the present invention will become apparent to those skilled in the art when the following description of the best mode contemplated for practicing the invention is read in conjunction with the accompanying drawings.

### BRIEF DESCRIPTION OF THE DRAWINGS

The description herein makes reference to the accompanying drawings wherein like reference numerals refer to like parts throughout the several views, and wherein:
Figure 1 is a schematic overhead view of a system according to the present invention having a passive chip and an active sensor;
Figure 2 is a schematic overhead view of a system according to the present invention having an active chip and a passive sensor;
Figure 3 is a schematic overhead view of a manufacturing facility having a plurality of sensors, data storage means and monitoring means;
Figure 4A is a flow chart illustrating the logic applied by control means for placing an operating machine in safe mode in response to a pulse signal from a proximity sensor according to the present invention; and
Figure 4B is a flow chart illustrating the logic applied by control means for placing an operating machine in safe mode in response to a continuous signal from a proximity sensor according to the present invention.

### DESCRIPTION OF THE PREFERRED EMBODIMENT

The present invention provides a system for detecting the proximity of an individual relative to a position within a manufacturing facility. The system 10 includes at least one chip 12 and at least one sensor 14. A chip 12 is retained by an individual in the manufacturing facility. The sensor 14 detects the proximity of the chip 12 with a specified range and can emit a signal in response to detection of one or more chips 12 within the specified range. By way of example and not limitation, when a chip 12, retained by an individual, is detected by a sensor 14 operably engaged, directly or indirectly, with a manufacturing device 22, the sensor 14 can emit a signal that results in the device 22 ceasing operations or entering a safe mode.

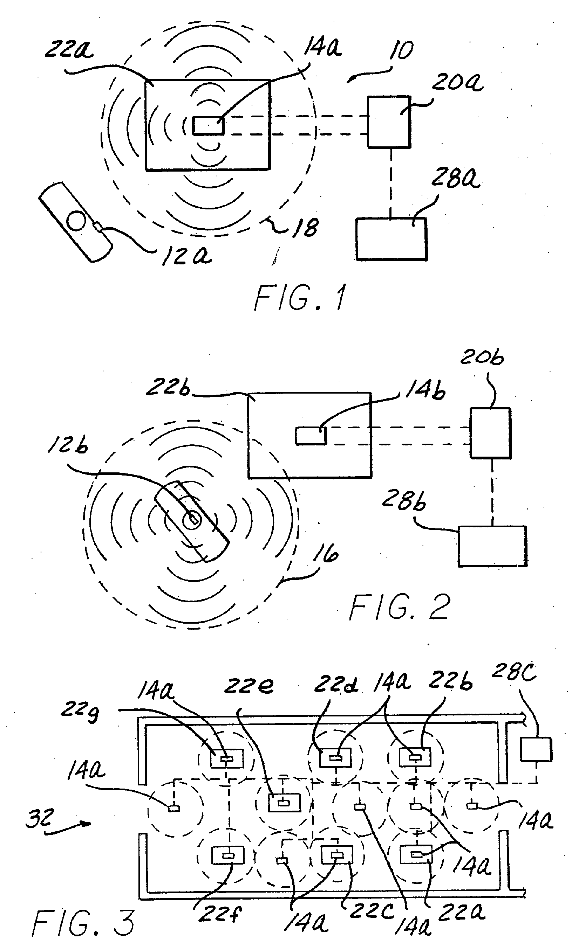

The chip 12 can be active or passive. An active chip 12b can emit an inaudible wave signal receivable by a sensor 14b over a range 16, as shown in Figure 2. As shown in Figure 1, a passive chip 12a does not emit a signal. The chip 12 can be retained by an individual in a badge, a hat, safety glasses or be maintained as a distinct item. The chip 12 can be uniquely configured, allowing a sensor 14 to detect and identify specific chips 12 when multiple chips 12 are functioning within a single manufacturing facility. For example, a chip 126 can emit an encoded, unique identification signal. The invention can be practiced with multiple chips 12 and multiple sensors 14 in a single manufacturing facility. Individual chips 12 can be distributed to different individuals operating in the manufacturing facility with unique individual or group identification characteristics. Each individual can be assigned a specific unique identification code associated with the corresponding chip 12 so that the location of each individual can be determined at any specific time when the individual is within range to be detected by any one of the multiple sensors 14. In such an embodiment of the invention, the system of chips 12 and sensors 14 can be used to track the movements of individuals within the manufacturing facility to teach one or more groups of workers having predefined job characteristics, such as a member of the plumbers group, engineering group, electrician group or the like. Alternatively, more than one similarly configured chips 12 can be used in a single manufacturing facility to track one or more groups of workers having predefined job characteristics, such as a member of the plumbers group, engineering group, electricians group or the like. For example, all maintenance workers can retain a first configuration of chip 12 and all machine operators can retain a second configuration of-chip 12. Alternatively, a combination of similarly configured chips 12 and uniquely configured chips 12 can be used in a single manufacturing facility. For example, each maintenance personnel of a manufacturing facility can retain uniquely configured chips 12 while all machine operators can retain similarly configured chips 12. In this embodiment of the invention, the location of maintenance personnel can be detected with greater accuracy relative to determining the location of any particular machine operator. The uniquely configured chips 12 can also be used in the present invention to enhance the security of the manufacturing facility. For example, plant management can be equipped with uniquely configured chips 12. Access to certain areas of the manufacturing facility can be controlled by gates or doors that respond only to a uniquely configured chip 12. Another use for uniquely configured chips 12 can be for non-employees such as contractors that enter the manufacturing facility. Non-employees can be equipped with uniquely configured chips 12 to track movement within the manufacturing facility and to prevent access to certain areas of the manufacturing facility.

Each of the sensors 14 can be active or passive. As shown in Figure 1, an active sensor 14a can detect the proximity of a chip 12a over a range 18. The sensor 14a can produce an inaudible wave signal having the range 18. A passive sensor 14b is shown in Figure 2. A passive sensor 14b can receive a signal emitted by the chip 12b. The sensor 14 can be positioned on a manufacturing device such as a stamping press, a lathe, or a welding machine. The sensor 14 can also be positioned adjacent to a manufacturing device if the range 16 or 18 encompasses a desired zone of safety around the manufacturing device 22b or 22a, respectively. One or more sensors 14a can be positioned on a single manufacturing device 22a to provide an array of ranges 18. The invention can also be practiced with a chip 12b operable to emit a signal having a range 16 and a sensor 14a operable to emit a signal having a range 18. In such an embodiment of the invention, the ranges 16 and 18 can be configured as desired. The ranges 16 and 18 should contemplate a desired distance between a chip 12 and a sensor 14 to ensure that a signal is emitted from the sensor 14 in adequate time to perform a subsequent function, such as the disengagement of a manufacturing device or the opening of a door. Sensors 14a or 14b can detect and distinguish between a plurality of different encoded, unique identification codes. As shown in Figure 3, a manufacturing facility can be equipped with multiple sensors 14a positioned at spaced intervals within the manufacturing facility. Sensors 14a can be positioned such that the ranges 18 of each sensor 14a are approximately tangent or overlapping with respect to an adjacent sensor 14a. Alternatively, sensors 14b can be positioned at spaced intervals such that a range 16 is detectable in the manufacturing facility by at least one sensor 14 at any time. In such embodiments of the invention, an entire manufacturing facility can be monitored, where the position of all chips 12 operating within the manufacturing facility is instantly determinable at all times. Alternatively, the invention can be practiced with sensors 14 positioned at manufacturing devices only. Figure 3 shows a floor layout 32 of a manufacturing facility using multiple sensors 14a. A sensor 14a can be positioned on each manufacturing device 22a-g to cover a substantial area of the floor layout 32. Additional sensors 14a can be added, positioned between manufacturing devices 22a-g to cover a greater area of the floor layout 32. One or more sensors 14b can also be used to monitor the floor of a manufacturing facility also. The sensors 14a can be electrically coupled to data storage means 28c, remote from one or more of the devices 22. Data storage means 28c will be discussed in greater detail below.

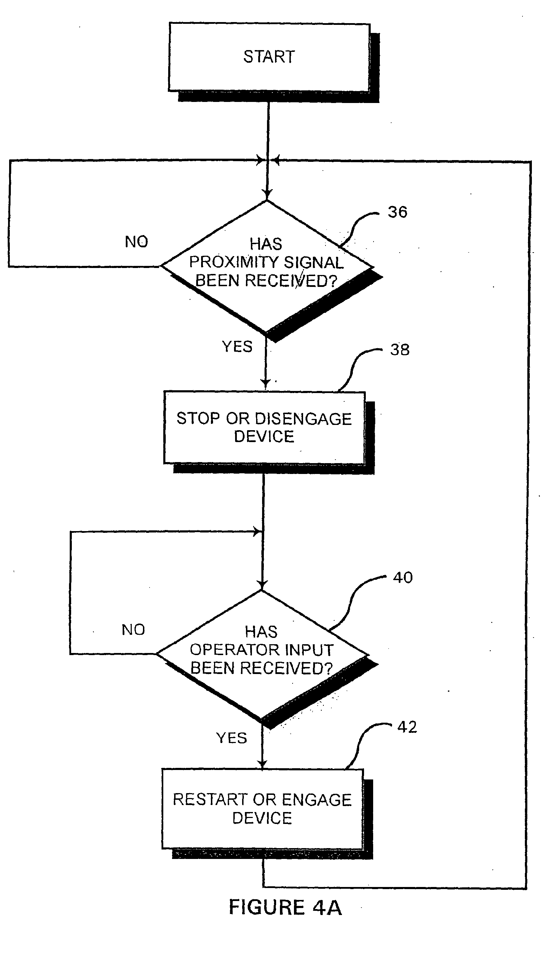

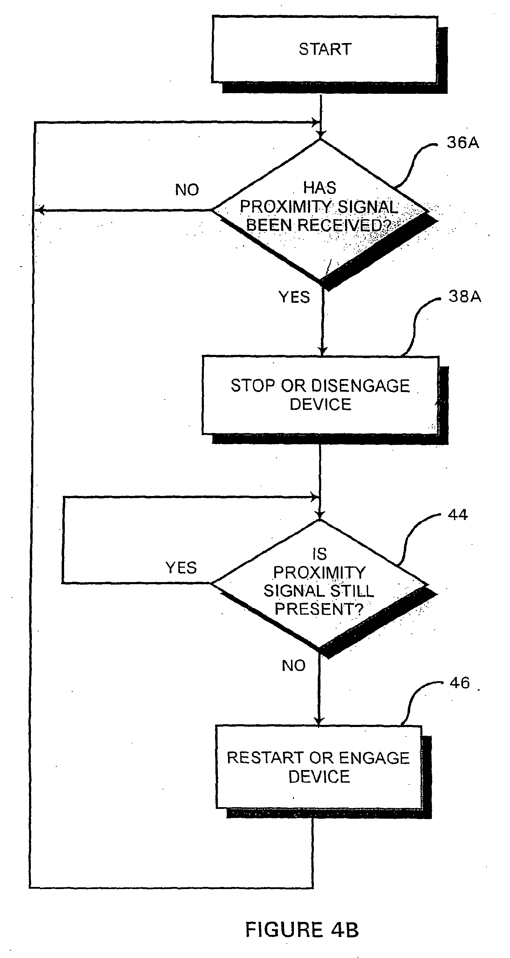

As shown in Figure 1, the present invention also includes control means 20a for receiving a chip-present output signal from one or more of the sensors 14a and for controlling one or more manufacturing devices 22a in response to the chip-present output signal from one of the sensors 14a depending on the particular sensor 14a generating the output signal. The process steps are shown in simplified flow diagrams in Figure 4A and 4B. Query 36 or 36A monitors whether a chip-present output signal, or proximity signal, from one of the sensors 14 has been received. Each of the sensors 14a and 14b can individually detect the proximity of one or more chips 12. When at least one chip 12 and at least one sensor 14 jointly occupy a range 16 or 18, the corresponding sensor 14 can emit a chip-present output signal to control means 20. When the corresponding sensor 14 emits a chip-present output signal corresponding to proximity of at least one chip 12, step 38 or 38A can perform a predefined function, such as to cease continued operation of an automated device or to disengage a manufacturing device 22 from being cycled or turned on, or perform some other predefined function. Alternatively, the control means 20 can receive the chip-present output signal from one or more sensors 14 positioned at a door or a gate and control a door or a gate to open in response to at least one chip present output signal corresponding to proximity of at least one chip 12. Each sensor 14 can emit an encoded signal corresponding to the sensed chip or chips to be sent to a remote centralized processing system or network, or to a local controller, processor or network or emit a single pulse signal corresponding to proximity or can emit a continuous signal as long as one of the chips 12 is in proximity. If the sensor 14 emits a pulse signal, as shown in Figure 4A, query 40 requires that the control means 20 receive operator input before the device 22 can be restarted. For example, disengagement of a device 22 can require maintenance personnel to restart the device 22. Step 42 restarts the device 22 after operator input. If the sensor 14 emits a continuous signal, query 44, as shown in Figure 4B, determines whether the signal is still being received by the control means 20. If the answer query 44 is yes, query 44 is repeated. If the answer to query 44 is no, the program branches to step 46 to restart the device 22.

The control means 20 can also be operable to emit an encoded signal receivable by centralized or local data storage means 28a or 28b, as shown in Figures 1 and 2 respectively. The data storage means 28 can record all occurrences of a manufacturing device 22 ceasing operations or occurrences of a gate or door being opened in the presence of one or more chips 12. The data stored by data storage means 28 can be useful in accurately determining the costs of operating a particular manufacturing device, the distribution of employees' time at specific locations in the manufacturing facility, the interaction among employees, and future planning of production and maintenance cycles.

While the invention has been described in connection with what is presently considered to be the most practical and preferred embodiment, it is to be understood that the invention is not to be limited to the disclosed embodiments but, on the contrary, is intended to cover various modifications and equivalent arrangements included within the spirit and scope of the appended claims, which scope is to be accorded the broadest interpretation so as to encompass all such modifications and equivalent structures as is permitted under the law.

## Claims

1. An apparatus for at least partially controlling operation of at least one machine comprising:
means for sensing a predetermined proximity of at least one chip associated with at least one individual with respect to each machine to be monitored; and
means for disengaging each corresponding machine in response to proximity being sensed by the sensing means.

2. The apparatus of claim 1 further comprising:
means for restarting each machine after the particular machine has been disengaged if the at least one chip associated with the at least one individual is no longer within the predetermined proximity with respect to the particular machine.

3. The apparatus of claim 1 further comprising:
means for communicating a disengagement of a particular machine to a location remote with respect to the particular machine.

4. The apparatus of claim 1 further comprising:
means for collecting information with respect to a frequency of disengagements of each machine.

5. The apparatus of claim 1 wherein the sensing means further comprises:
at least one sensor operably associated with respect to each machine to be at least partially controlled for sensing a predetermined proximity of the at least one chip with respect to the at least one sensor, the at least one sensor operable to emit a chip-present output signal corresponding to the sensed predetermined proximity of at least one chip.

6. The apparatus of claim 5 wherein the at least one chip emits a chip-present signal receivable by the at least one sensor, the signal emitted over a distance substantially equal to the predetermined proximity.

7. The apparatus of claim 6 wherein each of at least one chips is operable to emit an encoded unique identification signal.

8. The apparatus of claim 5 wherein the at least one chip is incorporated in one of a badge, a hat and an article of clothing.

9. The apparatus of claim 5 wherein the at least one sensor emits a chip-detection signal over a distance substantially equal to the predetermined proximity.

10. The apparatus of claim 5 wherein the at least one sensor is operable to detect and distinguish between a plurality of different unique identification codes associated with different chips.

11. The apparatus of claim 1 wherein the disengaging means further comprises:
a central processing unit for receiving a chip-present output signal from the sensing means and for controlling a predetermined function of an associated machine in response to the chip-present signal.

12. The apparatus of to claim 11 wherein the disengaging means further comprises:
a microprocessor operating in accordance with a program stored in memory.

13. An apparatus for controlling operation of at least one machine comprising:
at least one chip associated with respect to an individual; and
at least one sensor associated with respect to a particular one of the at least one machine for sensing a predetermined proximity of the at least one chip with respect to the at least one sensor; and
a switch operably associated with the at least one sensor and the particular one machine for controlling operation of the particular one machine in response to the at least one sensor.

14. The apparatus of claim 13 wherein the at least one chip actively emits a chip-present signal receivable by the at least one sensor over a distance substantially equal to the predetermined proximity.

15. The apparatus of claim 13 wherein the at least one sensor actively emits a chip detection signal over a distance substantially equal to the predetermined proximity.

16. A method for controlling operation of at least one machine comprising the steps of:
sensing a predetermined proximity of at least one chip associated with at least one individual with respect to each machine to be controlled with sensing means; and
disengaging each corresponding machine in response to proximity being sensed by the sensing means.

17. The method of claim 16 further comprising the step of step of:
restarting each machine after a particular machine has been disengaged if the at least one chip associated with the at least one individual is no longer within the predetermined proximity with respect to the particular machine.

18. The method of claim 17 further comprising the step of:
actively emitting a chip-present signal continuously in response to predetermined proximity of at least one chip associated with each individual with respect to the machine, wherein the restarting step operates to restart the machine in response to discontinuation of all chip-present signals within the predetermined proximity.

19. The method of claim 17 wherein the sensing step further comprises the step of:
passively emitting a chip-present signal as a pulse in response to an active query signal from the sensing means, wherein the restarting step operates to restart the machine in response to operator input.

20. The method of claim 16 further comprising the step of:
communicating a disengagement of the machine to a location remote with respect to the machine.

21. The method of claim 20 wherein the communicating step further comprises the step of:
signaling the disengagement of the machine to a control room in a manufacturing facility.

22. The method of claim 16 further comprising the step of:
collecting information with respect to a frequency of disengagements of the machine.

23. The method of claim 22 wherein the communicating step further comprises the step of:
recording data associated with disengagements of the machine in a data storage device.

24. The method of claim 16 wherein the sensing step further comprises the step of:
associating at least one chip with respect to each individual; and
associating at least one sensor with respect to each machine to be monitored for sensing a predetermined proximity of the at least one chip with respect to the at least one sensor.

25. The method of claim 24 further comprising the step of:
actively emitting a chip-present signal receivable by the at least one sensor from at least one chip over a distance substantially equal to the predetermined proximity.

26. The method of claim 24 further comprising the step of:
actively emitting a chip detection signal over a second distance substantially equal to the predetermined proximity from at least one sensor, any chip of the at least one chip within the second distance actively responding with a chip-present signal detectable by the at least one sensor.
